# EUROPEAN PATENT APPLICATION

(11) **EP 4 772 297 A1**
(43) Date of publication of application: **08.07.2026**
(21) Application number: 23949938.7
(22) Date of filing: 31.08.2023
(51) Int. Cl.: B22F 12/52, B22F 12/60, B29C 64/141, B22C 9/02

(54) **POWDER SPREADING APPARATUS, 3D PRINTING DEVICE, AND PRODUCTION LINE**

(71) Applicant: Kocel Intelligent Machinery (Anhui) Co., Ltd., Wuhu, Anhui 241200 (CN)
(72) Inventor: PENG, Fan, Yinchuan, Ningxia 750021 (CN); LIU, Yi, Yinchuan, Ningxia 750021 (CN); ZHOU, Zhijun, Yinchuan, Ningxia 750021 (CN); MA, Rui, Yinchuan, Ningxia 750021 (CN); MA, Wei, Yinchuan, Ningxia 750021 (CN); HE, Jiejun, Yinchuan, Ningxia 750021 (CN); SUN, Guanlin, Yinchuan, Ningxia 750021 (CN); LI, Xiaojun, Yinchuan, Ningxia 750021 (CN); BAI, Xue, Yinchuan, Ningxia 750021 (CN); REN, Jianxi, Yinchuan, Ningxia 750021 (CN)
(74) Representative: Vitina, Maruta
(86) International application number: PCT/CN2023/116340
(87) International publication number: WO 2025/043667

(57) **Abstract**

A powder spreading device includes a powder container body, a powder barrier assembly and a powder feed roller assembly. The powder barrier assembly is provided on a side of the powder container body. The powder container body and the powder barrier assembly together form a powder feed container. A bottom of the powder container body is provided with a powder discharge outlet. The powder feed roller assembly is rotatably provided at the powder discharge outlet, and is arranged along a length direction of the powder discharge outlet. A bottom of the powder barrier assembly is in contact with the powder feed roller assembly. A plurality of annular powder grooves are arranged spaced apart along a length direction of the powder feed roller assembly. A three-dimensional (3D) printing device and a 3D printing production line are also provided.

## Description

### TECHNICAL FIELD

This application relates to three-dimensional (3D) printing technologies, and more particularly to a powder spreading device, a 3D printing device, and a production line.

### BACKGROUND

In the three-dimensional (3D) printing forming technology, granular or powdered material is typically loaded into a powder spreader. The powder spreader then advances incrementally to spread the powdered material on a spreading surface. Then the powder is leveled by a scraper, and finally a binding material is selectively sprayed by a printhead onto the spread powder in accordance with a cross-section shape of a designed prototype, so that the powdered material bonds together to form a cross-section of the designed prototype. After one layer is printed, the working platform descends by a height of the one-layer thickness, and then the above steps are repeated until the prototype printing is completed.

Currently, a wide variety of new ceramic materials, dominated by silicon carbide ceramic, porous silicon nitride ceramic, alumina ceramic and tricalcium phosphate ceramic, have been applied to the 3D printing process. These ceramic powder materials are prone to agglomeration due to moisture, which will render the powder supply unsmooth, thereby affecting the flatness of the powder layer, and reducing the quality of printed products.

### SUMMARY

In view of this, it is necessary to provide a powder spreading device, a three-dimensional (3D) printing device, and a production line to address the problem of poor product quality caused by uneven powder layer in the existing 3D printing devices.

In order to solve the above problems, technical solutions of the present disclosure are described as follows.

In a first aspect, this application provides a powder spreading device, comprising:
a powder container body;
a powder barrier assembly; and
a powder feed roller assembly;
wherein the powder barrier assembly is provided on a side of the powder container body; the powder container body and the powder barrier assembly together form a powder feed container; a bottom of the powder feed container body is provided with a powder discharge outlet; the powder feed roller assembly is rotatably provided on the powder discharge outlet, and is configured to extend along a length direction of the powder discharge outlet; a bottom of the powder barrier assembly is in contact with the powder feed roller assembly; and a plurality of annular powder grooves are arranged spaced apart along a length direction of the powder feed roller assembly; and
in response to a case that the powder feed roller assembly rotates along a preset direction, powder materials in the powder feed container are sprayed onto a powder spreading surface through the plurality of annular powder grooves.

In a second aspect, this application further provides a 3D printing device comprising the powder spreading device as described above.

In a third aspect, this application further provides a 3D printing system comprising:
a frame;
a powder spreading device;
a printing device; and
a moving device;
wherein the printing device and the powder spreading device are movably arranged on the frame, and are drivably connected with the moving device;
the moving device is configured to simultaneously drive the powder spreading device and the printing device to move along different motion paths in an interleaving manner, so as to simultaneously perform powder spreading and printing;
the powder spreading device comprises the powder container body, the powder barrier assembly and the powder feed roller assembly; and
the powder barrier assembly is provided on a side of the powder container body; the powder container body and the powder barrier assembly together form a powder feed container; a bottom of the powder feed container body is provided with the powder discharge outlet; the powder feed roller assembly is rotatably provided on the powder discharge outlet, and is configured to extend along a length direction of the powder discharge outlet; a bottom of the powder barrier assembly is in contact with the powder feed roller assembly; a plurality of annular powder grooves are arranged spaced apart along a length direction of the powder feed roller assembly; and

In response to a case that the powder feed roller assembly rotates along a preset direction, powder materials in the powder feed container are sprayed onto a powder spreading surface through the plurality of annular powder grooves.

In a fourth aspect, this application further provides a 3D printing production line comprising the 3D printing system as described above.

This application has the following beneficial effects.

In the powder spreading device, through contact cooperation of the powder barrier assembly and the powder feed roller assembly, the powder materials in the powder feed container can only be conveyed through the plurality of annular powder grooves to powder spreading surface by rotating the powder feed roller assembly, that is, an amount of the powder materials that is conveyer depends on a size of each annular powder groove, thereby achieving a quantitative powder feeding effect through the plurality of annular powder grooves to ensure flatness of the powder spreading surface and improve product quality. In addition, through rotation of the powder feed roller assembly and quantitative powder feeding of the plurality of annular powder grooves, problems of poor powder feeding caused by powder materials being easily affected by the environment and forming agglomeration can be prevented.

### BRIEF DESCRIPTION OF THE DRAWINGS

Fig. 1 is a structural diagram of a powder spreading device according to an embodiment of the present disclosure.
Fig. 2 is a structural diagram of the powder spreading device in Fig. 1 from another view.
Fig. 3 is a partially enlarged view of the powder spreading device in Fig. 2.
Fig. 4 is another partially enlarged view of the powder spreading device in Fig. 2.
Fig. 5 is a structural diagram of a powder spreading device according to another embodiment of the present disclosure.
Fig. 6 is a partially enlarged view of the powder spreading device in Fig. 5.
Fig. 7 is a partial structural diagram of a powder distribution mechanism according to an embodiment of the present disclosure.
Fig. 8 is a structural diagram of a three-dimensional (3D) printing system according to an embodiment of the present disclosure during motion.
Fig. 9 is a structural diagram of a 3D printing production line according to an embodiment of the present disclosure.
Fig. 10 is a structural diagram of a 3D printing production line according to another embodiment of the present disclosure.

In the figures: 100-powder spreading device, 110- powder container body, 120-powder barrier assembly, 121-mounting part, 122-contact part, 130- powder feed roller assembly, 131-annular powder groove, 132-powder passage, 140-connecting baffle, 150-powder spreading component, 151-powder spreading channel, 160-scraper, 170-powder distribution mechanism, 171-toothed part, 180-powder scraping mechanism, 181-protrusion, 190-first arrow, 200-frame, 300-printing device, 310-second arrow, 400-3D printing system, 500-centralized sand mixing device, 600-centralized liquid supply device, 710-sand cleaning station, 720-drying station, 730-workpiece storage station, and 740-conveying mechanism.

### DETAILED DESCRIPTION OF EMBODIMENTS

The present disclosure provides a powder spreading device, including a powder container body, a powder barrier assembly and a powder feed roller assembly. The powder barrier assembly is provided on a side of the powder container body. The powder container body and the powder barrier assembly together form a powder feed container. A bottom of the powder feed container body is provided with a powder discharge outlet. The powder feed roller assembly is rotatably provided on the powder discharge outlet, and is configured to extend along a length direction of the powder discharge outlet. A bottom of the powder barrier assembly is in contact with the powder feed roller assembly. A plurality of annular powder grooves are arranged spaced apart along a length direction of the powder feed roller assembly. In response to a case that the powder feed roller assembly rotates along a preset direction, powder materials in the powder feed container are sprayed onto a powder spreading surface through the plurality of annular powder grooves.

To facilitate the understanding of the present disclosure, the present disclosure will be completely described with reference to the accompanying drawings. The preferred embodiments of the present disclosure are shown in the accompanying drawings. However, the present disclosure can be implemented in many different forms and is not limited to the embodiments described herein. On the contrary, the embodiments are provided to facilitate a more thorough and comprehensive understanding of the present disclosure.

It should be noted that the term "arrangement" can be interpreted in a broad sense. It can be "direct arrangement" or "indirect arrangement through an intermediate medium". The term "connection" can be interpreted in a broad sense. It can be "direct connection" or "indirect connection through an intermediate medium". The terms, such as "vertical", "horizontal", "left", "right", "top", "bottom", "bottom end", "top end" and other directional indications used herein, are only used for illustrating relative position relationship and motion between components in a specific state (as shown in the accompanying drawings), rather than limiting the disclosure.

Unless otherwise defined, technical terms used herein have the same meaning as commonly understood by those of ordinary skill in the art. The technical terms used herein are only illustrative, and are not intended to limit this application. Besides, the term "and/or" used herein includes three solutions, for example, "A" and/or "B" includes solution "A", solution "B", and a combination thereof.

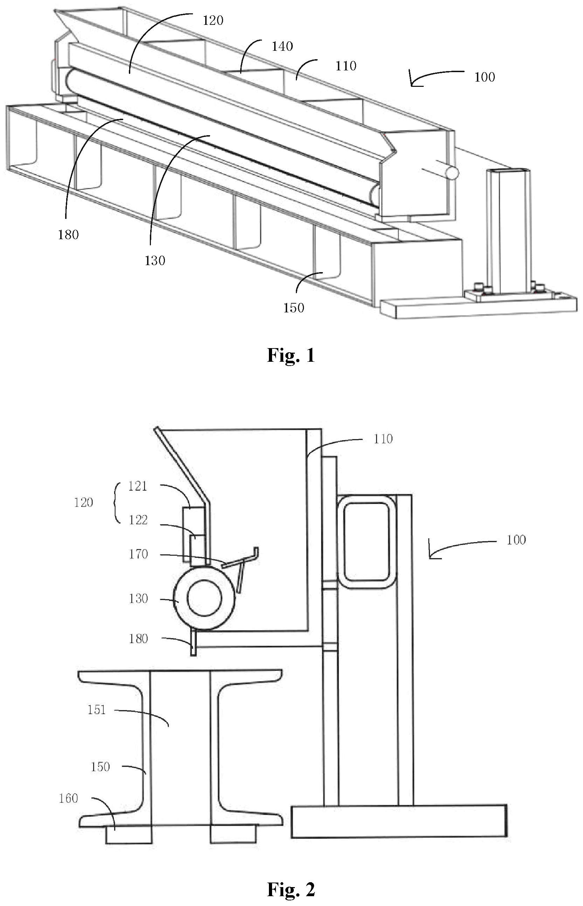

Referring to Figs. 1-7, the present disclosure a powder spreading device. The powder spreading device is applied in a 3D printing device, so as to evenly spray powder materials on a powder spreading surface through movement to achieve powder spreading operation. The powder spreading device includes a powder container body 110, a powder barrier assembly 120 and a powder feed roller assembly 130.

The powder container body 110 is a main structure for forming a powder feed container. Generally, the powder container body 110 is fixedly arranged on a main body of the powder spreading device. In an embodiment of the present disclosure, the powder barrier assembly 120 is provided on a side of the powder container body 110. The powder container body 110 and the powder barrier assembly 120 together form the powder feed container, that is, the powder barrier assembly 120 is configured as a side plate of the powder feed container. The powder feed container is configured to temporarily store powder materials.

A bottom of the powder feed container body is provided with a powder discharge outlet. The powder feed roller assembly 130 is rotatably provided on the powder discharge outlet, and is configured to extend along a length direction of the powder discharge outlet as shown in Fig. 1. At this time, the powder discharge outlet can be a strip-shaped hole, and the powder feed roller assembly 130 can be located on the strip-shaped hole and extends along a length direction of the strip-shaped hole.

In an embodiment, a bottom of the powder barrier assembly 120 is in contact with the powder feed roller assembly 130. A plurality of annular powder grooves 131 are arranged spaced apart along a length direction of the powder feed roller assembly 130. Under such circumstance, the bottom (end) of the powder barrier assembly 120 is in contact with a top of each of the plurality of annular powder grooves 131, effectively sealing a portion of each of the plurality of annular powder grooves 131 through the bottom (end) of the powder barrier assembly 120. In addition, sealed portions of the plurality of annular powder grooves 131 extend along a length direction of the powder feed roller assembly 130, which indicates that the sealed portions of the plurality of annular powder grooves 131 extend along the length direction of the powder discharge outlet.

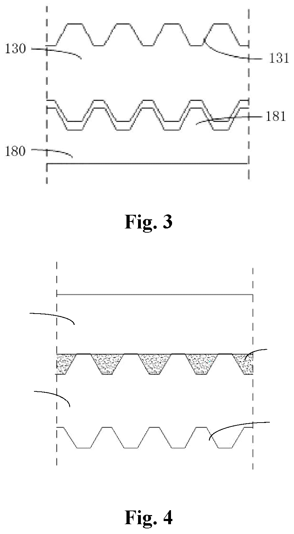

Referring to Fig. 4, during operation, the powder materials can be output through a powder passage 132 (the shaded area in Fig. 4) formed by the powder barrier assembly 120 and the plurality of annular powder grooves 131, which achieves the quantitative powder feeding.

In response to a case that the powder feed roller assembly 130 rotates along the preset direction, that is the powder feed roller assembly 130 rotates along an axis of the powder feed roller assembly 130, the powder materials in the powder feed container are sprayed onto the powder spreading surface through the plurality of annular powder grooves 131. During the specific operation as shown in Fig. 2, the preset direction is counterclockwise. When the powder materials need to be output, a part of the powder feed roller assembly 130 is put into the powder materials. The powder feed roller assembly 130 rotates counterclockwise to drive the powder materials contained in the plurality of annular powder grooves 131 within the powder feed container to rotate following the powder feed roller assembly 130. When the powder feed roller assembly 130 drives the powder materials to move to a position of the powder barrier assembly 120, a part of the powder materials is blocked by powder barrier assembly 120, while the other part of the powder materials in the plurality of annular powder grooves 131 passes through the position of the powder barrier assembly 120, so that such powder materials gradually move towards the powder spreading surface through the rotation of the powder feed roller assembly 130, and finally are spray onto the powder spreading surface under gravity.

From the above content, it can be known that in the powder spreading device of the present disclosure, the powder barrier assembly 120 contacts with the powder feed roller assembly 130, so that the powder materials in the powder feed container rotate through the powder feed roller assembly 130, and are sprayed onto the powder spreading surface only through the plurality of annular powder grooves 131. That is, an amount of the powder materials that is conveyer depends on a size of each annular powder groove 131, thereby achieving a quantitative powder feeding effect through the plurality of annular powder grooves 131 to ensure flatness of the powder spreading surface and improve product quality. In addition, through rotation of the powder feed roller assembly 130 and quantitative powder feeding of the plurality of annular powder grooves 131, problems of poor powder feeding caused by powder materials being easily affected by the environment and forming agglomeration can be prevented. Consequently, it is suitable for powder spreading with various materials prone to moisture-induced agglomeration, such as silicon carbide ceramics, porous silicon nitride ceramics, alumina ceramics, and tricalcium phosphate ceramics. Besides, the above powder spreading device is not only applicable to ceramic materials, but also suitable for powder materials such as metal powder, quartz sand, silica sand, and gypsum.

In an embodiment, a rotation speed of the powder feed roller assembly 130 can be controlled to control the amount of the powder materials that is output, so as to meet powder spreading requirements in different working conditions. In an embodiment, the plurality of annular powder grooves 131 can be arranged in diverse layout. For example, the plurality of annular powder grooves 131 can be uniformly distributed along a length of the powder feed roller assembly 130 to ensure uniform powder spreading across all positions. Simultaneously, along a direction extending from a middle of the powder feed roller assembly 130 toward both ends, a distance between two adjacent annular powder grooves 131 can gradually increase to meet uniform powder spreading requirements under specific working conditions. The plurality of annular powder grooves 131 can be arranged in diverse layout, and are not limited by the embodiments of the present disclosure.

In addition, it should be noted that a center line of each of the plurality of annular powder grooves 131 can be perpendicular to the axis of the powder feed roller assembly 130, and the plurality of annular powder grooves 131 are arranged in parallel to ensure the powder output effect.

In an embodiment, the powder barrier assembly 120 includes a mounting part 121 and a contact part 122. The mounting part 121 is removably provided on the side of the powder container body 110. Specifically, the mounting part 121 is removably arranged on the side of the powder container body 110 through bonding, clamping or bolt connection to form a part of the powder feed container, the contact part 122 is removably arranged on a bottom of the mounting part 121 and the contact part 122 is in contact with the powder feed roller assembly 130. In such situation, the mounting part 121 can provide a mounting position for the contact part 122, so as to achieve the contact effect with the powder feed roller assembly 130 through only adjusting a position of the contact part 122. It is known that the above arrangement not only facilitates the assembly of the powder barrier assembly 120, but also simplifies the contact with the powder feed roller assembly 130. At the same time, the powder barrier assembly 120 is removably provided on the bottom of the mounting part 121, which enables the contact part 122 to be replaced at any time, thereby enhancing its practicality.

In an embodiment, the contact part 122 is removably connected with the mounting part 121 through various ways. In one optional solution, the bottom of the mounting part 121 is provided with a mounting groove, and the contact part 122 is connected with the mounting groove through bonding, clamping, magnetic connection or bolt connection, which facilitates the contact part 122 for removable mounting.

In an embodiment, the contact part 122 can be in various shapes. For example, the contact part 122 can be a plate-shaped contact part, a cylindrical contact part, such as a roller, or a structural component in other shapes, as long as the it can contact with the powder feed roller assembly 130 along the length direction of the powder feed roller assembly 130, which is not limited to the above arrangement. At the same time, the contact part 122 can be a rigid component or a flexible component, which is not limited by the embodiments of the present disclosure.

In an embodiment, in order to ensure the contact effect with the powder feed roller assembly 130 and further extend its service life, the contact part 122 can be a flexible component, preferably a wear-resistant flexible component. For example, the contact part 122 can be a rubber component, or its outer surface in contact with the powder feed roller assembly can be coated with rubber. This approach not only ensures effective contact between the contact part 122 and the powder feed roller assembly 130, but also minimizes the impact of the contact part 122 and the powder feed roller assembly 130 on the rotational efficiency of the contact part 122. In addition, the mounting part 121 and the contact part 122 can be integrally formed to improve production efficiency. The mounting part 121 and the contact part 122 can be formed in multi-segment to ensure the straightness between the mounting part 121 and the contact part 122. These arrangements are not limited by the embodiments of the present disclosure.

The powder spreading device further includes a plurality of connecting baffles 140 varying in size. The plurality of connecting baffles 140 are configured to connect the powder barrier assembly 120 with the powder container body 110, that is, the plurality of connecting baffles 140 can be inserted between the powder barrier assembly 120 and the powder container body 110, so as to connect the powder barrier assembly 120 with the powder container body 110 to form the powder feed container as shown in Fig. 1. Such connecting way has simple structure and convenient operation, which can rapidly realize assembly of the powder barrier assembly 120 and the powder container body 110. In an embodiment, the plurality of connecting baffles 140 can connect the powder barrier assembly 120 with the powder container body 110 through bolt connection, or clamping. These arrangements are limited by the embodiments of the present disclosure.

In an embodiment, the plurality of connecting baffles 140 have a plurality of sizes. The powder barrier assembly 120 is in contact with different positions on the powder feed roller assembly 130 through the plurality of connecting baffles140 varying in size. Specifically, when the plurality of connecting baffles 140 adopts a first size to connect the powder barrier assembly 120 and the powder container body 110, the powder barrier assembly 120 is in contact with a first position of the powder feed roller assembly 130; and when the plurality of connecting baffles 140 adopts a second size to connect the powder barrier assembly 120 and the powder container body 110, the powder barrier assembly 120 is in contact with a second position of the powder feed roller assembly 130. The first position and the second position are circumferentially spaced apart along the powder feed roller assembly 130. In such way, the powder barrier assembly 120 is in contact with different positions on the powder feed roller assembly 130 through replacing different sizes of the plurality of connecting baffles140.

Under the above conditions, the powder barrier assembly 120 is in contact with different positions on the powder feed roller assembly 130 through replacing different sizes of the plurality of connecting baffles140, so as to satisfy the powder outlet requirements of materials with varying particle sizes and characteristics, enhancing the practicality of the equipment. For example, in response to a case that the material has poor flowability, the powder barrier assembly 120 can be controlled to contact with a position of the powder feed roller assembly 130 away from the powder container body 110; and in response to a case that the material has good flowability, the powder barrier assembly 120 can be controlled to be in contact with a position of the powder feed roller assembly 130 close to the powder container body 110, so that the powder feed roller assembly 130 can play a good role on transporting materials with different flowability. Specifically, based on the characteristics of the materials, different positions of the powder barrier assembly 120 in contact with the powder feed roller assembly 130 can be selected to satisfy different powder spreading requirements of different materials.

In an embodiment, when the plurality of connecting baffles 140 adopts one size to connect the powder barrier assembly 120 and the powder container body 110, the number of the connecting baffle 140 is plurality, the plurality of connecting baffles 140 can be provided spaced apart along a length direction of the powder barrier assembly 120 or a length direction of the powder container body 110, so as to ensure the connecting stability.

In an embodiment, the powder barrier assembly 120 is rotatably provided on the side of the powder container body 110, and is configured to rotate to be in contact with different positions on the powder feed roller assembly 130. Such method can satisfy powder outlet requirements of material with different particle sizes and characteristics, thereby enhancing the practicality of the equipment. For example, in response to a case that the material has poor flowability, the powder barrier assembly 120 can be controlled to be in contact with the position of the powder feed roller assembly 130 away from the powder container body 110; and in response to a case that the material has good flowability, the powder barrier assembly 120 can be controlled to be in contact with the position of the powder feed roller assembly 130 close to the powder container body 110, so that the powder feed roller assembly 130 can play a good role on transporting materials with different flowability. Specifically, based on the characteristics of the materials, different positions of the powder barrier assembly 120 in contact with the powder feed roller assembly 130 can be selected to satisfy different powder spreading requirements of different materials.

In an embodiment, a top of the powder barrier assembly 120 can be rotatably provided, so that a bottom of the powder barrier assembly 120 can rotate around its top to satisfy the powder spreading requirements of materials with different particle sizes and characteristics. Of course, in such situation, the powder barrier assembly 120 can include the mounting part 121 and the contact part 122. The mounting part 121 is removably arranged on the side of the powder container body 110. The contact part 122 is removably provided on the bottom of the mounting part 121, and the contact part 122 is in contact with the powder feed roller assembly 130, so as to achieve contact with the powder feed roller assembly 130 at different positions through replacing the contact part 122 varying in size.

In above situation, the present disclosure not only realizes the powder barrier assembly 120 is in contact with the different positions of the powder feed roller assembly 130 to satisfy the powder spreading requirements of materials with different particle sizes and characteristics, but also controls a size of the powder feed container by changing a position of the powder barrier assembly 120, so as to adapt to different devices and working conditions.

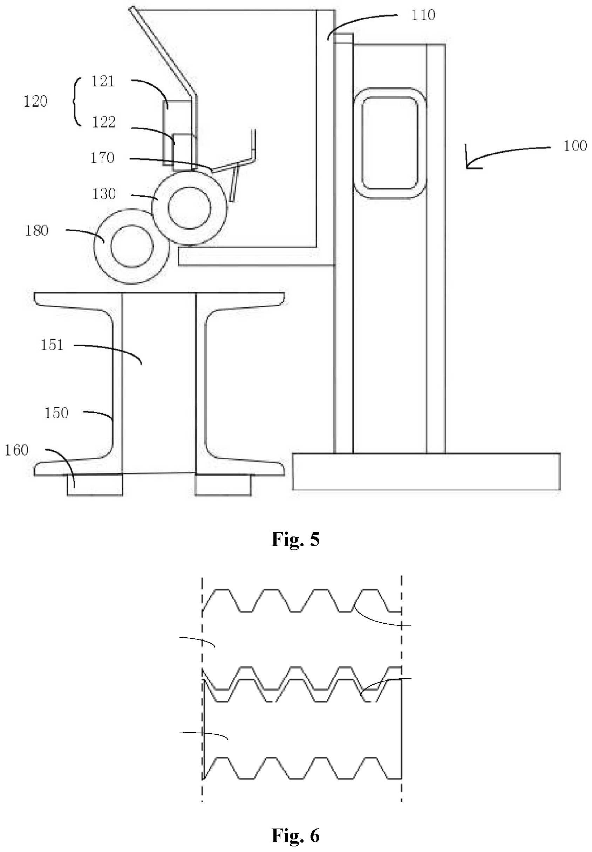

In an embodiment, the plurality of annular powder grooves 131 varies in shapes. Optionally, a width of each annular powder groove 131 is configured to increase along a radial direction of the powder feed roller assembly 130 as shown in Fig. 3 or Fig. 6, that is, each of the plurality of annular powder grooves 131 has a trapezoidal cross-section with a narrow bottom and a wide opening along the radial direction of the powder feed roller assembly 130. The plurality of annular powder grooves 131 with such structure can satisfy powder feeding efficiency, have better anti-sticking sand effect compared with other structures, and better realize quantitative powder feeding effect. In an embodiment, in order to better realize better anti-sticking sand effect, a bottom surface of each of the plurality of annular powder grooves 131 is provided with a conner to ensure better sand flow effect.

Of course, each of the plurality of annular powder grooves 131 can also has a triangular cross-section, rectangular cross-section, semi-circular cross-section or any other shapes, which is not limited by the embodiments of the present disclosure.

In an embodiment, the powder feed roller assembly 130 includes a plurality of rollers connected in sequence, and the plurality of rollers are each independently provided with a drive part. The drive part is configured to drive the plurality of rollers to rotate. In such situation, the powder feed roller assembly 130 is divided into a plurality of segments along its length direction, and each segment has a drive part. Then the drive part is configured to respectively drive the plurality of rollers to rotate, so that rotation speeds of the plurality of rollers can be adjusted. In response to a case that such structure is adopted for the powder feed roller assembly 130, it can meet powder spreading requirements under various working conditions. For example, if poor powder discharge occurs at a specific position along the length of the powder feed roller assembly 130, a rotation speed of corresponding roller at position can be increased to meet the powder spreading requirements. In summary, such method can realize better quantitative powder feeding effect through adjusting the rotation speeds of the plurality of rollers.

In an embodiment, the powder feed roller assembly 130 further includes a central shaft. The plurality of rollers are sleevedly provided on the central shaft in sequence. drive parts of the plurality of rollers are provided spaced apart on the central shaft. The plurality of rollers are drivably connected with the drive part in one-to-one correspondence. Such way not only facilitates an overall assembly of the powder feed roller assembly 130, but also facilitates to realizing independent drive effects for each of the plurality of rollers.

In an embodiment, the plurality of rollers are sleevedly provided on the central shaft through a bearing in sequence. A conductive ring can be provided at a middle of an inner cavity of each of the plurality of rollers, and metal contacts can be provided on each of the plurality of rollers corresponding to the conductive ring. Coils can also be provided on an inner side of each of the plurality of rollers, where permanent magnets corresponding to individual coils are segmentally provided on the central shaft, each metal contact can be connected with the cables, respectively, and the central shaft is provided with axially extending channels for the cables to pass through, that is, each cable is connected with each metal contact through passing through the channels. When the powder spreading device begins to step forward, a control part is configured to activate electrical current through each cable, and each metal contact is electrically connected with each conductive ring, where each roller with the coils is configured as a rotor. After energization, the rotor rotates around the central shaft, that is, each roller rotate around the central shaft, thereby achieving individually driven operation of each roller.

At the same time, a plurality of sensors are provided respectively corresponding to the plurality of rollers. When a powder feeding amount needs adjustment at a specific position of a certain sensor, a rotation speed of a roller corresponding to the certain sensor needs to be adjusted. At this time, the control part is configured to control a cable corresponding to such roller to adjust the rotation speed of such roller, that is, the permanent magnet is arranged on the central shaft, and the coils are arranged oh each roller, when an input current on each roller changes, the rotation speed of each roller accordingly change, so that the rotation speed of each roller along an extension direction of a scraper can be controlled to precisely control the powder feeding amount in segment, ensuring that the powder spreading surface remains flat.

The powder spreading device further includes a powder spreading component 150 and two scrapers 160. Referring to Fig. 1, the powder spreading component 150 is provided on a bottom of the powder feed roller assembly 130. The powder spreading component 150 is provided with a powder spreading channel 151. The powder spreading channel 151 is configured to face towards the powder feed roller assembly 130. In response to a case that the powder materials fall into the powder spreading channel 151 through the powder feed roller assembly 130 due to gravity, the powder spreading channel 151 is configured to face towards the powder spreading surface to allow the powder materials fall onto the powder spreading surface through the powder spreading channel 151.

Besides, the two scrapers 160 are provided on two sides of a bottom the powder spreading channel 151, respectively. The two scrapers 160 are configured to extend along a length direction of the powder spreading channel 151. In this situation, in a case that powder spreading is performed along a first powder spreading direction, one of the two scrapers 160 is configured to spread the powder materials to ensure the flatness of the powder spreading surface. In response to a case that powder spreading is performed along a direction opposite to the first powder spreading direction, the other one of the two scrapers 160 is configured to spread the powder materials to realize bidirectional powder spreading. During a specific mounting process, the two scrapers 160 can be symmetrically arranged at a bottom of the powder spreading channel 151 to better achieve bidirectional powder spreading.

The powder spreading device further includes a powder distribution mechanism 170. The powder distribution mechanism 170 is movably arranged in the powder feed container and is configured to extend along the length direction of the powder feed roller assembly 130. At this time, before the powder materials are conveyed through the powder feed roller assembly 130, the powder materials in the powder feed container are loosened through the movement of the powder distribution mechanism 170, so as to prevent agglomerated powder materials from falling into the powder feed roller assembly 130, while the powder materials are dispersed to various positions along the length of powder feed roller assembly 130, so as to ensure uniformity of the powder materials conveyed along the powder feed roller assembly 130.

In an embodiment, the movement of the powder distribution mechanism 170 is in plurality, including vibration, vertical oscillation and horizontal oscillation. In an embodiment, the powder distribution mechanism 170 includes a powder distribution main body and a drive component. The drive component is drivably connected with the powder distribution main body. The powder distribution main body is provided with a toothed part 171. The toothed part 171 is configured to loosen the powder materials in the powder feed container to prevent the agglomerated powder materials from falling into the powder feed roller assembly 130. In addition, the drive component is configured to drive the toothed part 171 to reciprocate along the length direction of the powder feed roller assembly 130, or to rotate in the powder feed container, so that positions of the powder materials are dispersed to various positions along the length of powder feed roller assembly 130, ensuring uniformity of the powder materials conveyed along the powder feed roller assembly 130. In an embodiment, the powder distribution main body can also be equipped with other movement, that is, it can swing along a direction perpendicular to the axis of the powder feed roller assembly 130, so as to realize better effect of loosening the powder materials. In an embodiment, the toothed part 171 can be comb teeth, during operation, multiple continuously distributed teeth contact with the powder materials to play a role of combing the powder materials. The toothed part 171 can be brush teeth. These arrangements are limited by the embodiments of the present disclosure.

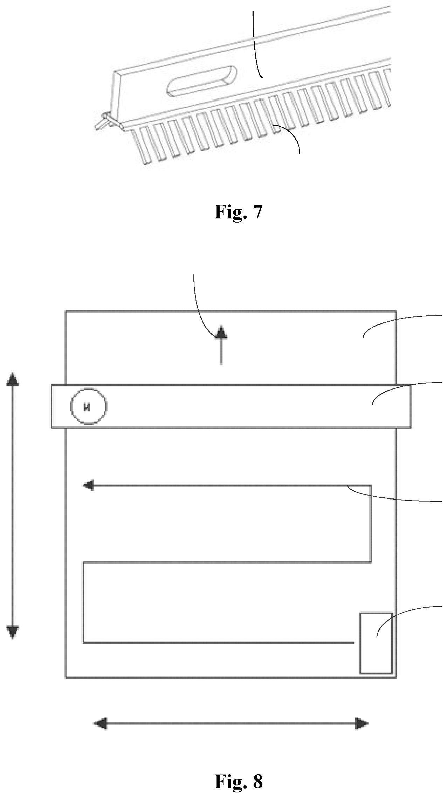

In an embodiment, the powder distribution main body have various structures. In an embodiment, the powder distribution main body is a single plate-shaped structure, which facilitates processing and assembly. In an embodiment, the powder distribution main body has a structure with a V-shaped cross-section as shown in Fig. 7, and during assembly of the powder distribution main body with such structure, an opening of the V-shaped cross-section can face toward the powder feed roller assembly 130, that is, the toothed part 171 on both sides faces towards the powder feed roller assembly 130, so as to realize improved powder loosening. In an embodiment, the powder distribution main body may also be a spiral rod or a stirring rod with loosening blades, and is configured to rotate or reciprocate in the powder feed container.

The powder spreading device further includes a powder scraping mechanism 180. The powder scraping mechanism 180 is provided on a bottom of the powder feed roller assembly 130. The powder scraping mechanism 180 is provided with a plurality of protrusions 181 spaced apart along its length direction and the plurality of protrusions 181 are configured to correspondingly fit the plurality of annular powder grooves 131. In such situation, when the powder materials are configured to be rotated to the bottom of the powder feed roller assembly 130, part of the powder materials falls due to the gravity, and the other part of the powder materials adhering to the plurality of annular powder grooves 131 is scraped off by the powder scraping mechanism 180, so as to play a role on cleaning the plurality of annular powder grooves 131 while realizing quantitative powder feeding effect.

The powder scraping mechanism 180 varies in shapes. In an embodiment, the powder scraping mechanism 180 is a plate mechanism, as shown in Figs. 2-3. At this time, the plate mechanism is inserted at the bottom of the powder feed roller assembly 130, and the plurality of protrusions 181 on the plate mechanism play a role on realizing quantitative powder feeding effect, and cleaning the plurality of annular powder grooves 131. The powder scraping mechanism 180 with such structure has simple processing, convenient mounting and small occupied using space.

In an embodiment, the powder scraping mechanism 180 is a cylindrical mechanism, as shown in Figs. 5-6. At this time, the cylindrical mechanism is provided at the bottom of the powder feed roller assembly 130, and the plurality of protrusions 181 on the cylindrical mechanism play a role on realizing quantitative powder feeding effect, and cleaning the plurality of annular powder grooves 131. In an embodiment, the cylindrical mechanism is rotatably provided at the bottom of the powder feed roller assembly 130, and the plurality of protrusions 181 on the cylindrical mechanism are annular protrusions matching with the plurality of annular powder grooves 131. During operation, a rotation direction of the cylindrical mechanism is opposite to that of the powder feed roller assembly 130, so as to better realize quantitative powder feeding effect, and clean the plurality of annular powder grooves 131. In an embodiment, the cylindrical mechanism is a brush roller.

In an embodiment, the powder feed roller assembly 130 can be integrally formed or machined. In an embodiment, the powder feed roller assembly 130 includes a plurality of rotating components. The plurality of rotating components are connected successively, and each of the plurality of annular powder grooves 131 is formed between each two adjacent rotating components. Such arrangement facilitates formation of the powder feed roller assembly 130 which facilitates formation of the plurality of annular powder grooves 131.

In an embodiment, the powder feed roller assembly 130 can be formed by casting, additive manufacturing, and machining. Such method enables a formed powder feed roller assembly 130 to exhibit improved strength and higher precision. In an embodiment, the powder feed roller assembly 130 can also be formed in other methods, which is not limited by the embodiments of the present disclosure.

In an embodiment, a coating can be provided in the plurality of annular powder grooves 131. The coating plays a role on anti-adhesion, anti-corrosion, and anti-rust effects to better ensure quantitative powder feeding effect. Of course, a specific material of the coating includes polytetrafluoroethylene and or silicon carbide, which is not limited by the embodiments of the present disclosure.

Based on the powder spreading device of the present disclosure, a three-dimensional (3D) printing system is provided, and the 3D printing system includes the powder spreading device descried above.

Based on the powder spreading device of the present disclosure, a 3D printing system is provided. The 3D printing device includes a frame 200, the powder spreading device 100, a printing device 300 and a moving device.

The frame 200 is a main component of the 3D printing system, so as to provide mounting positions for other components of the 3D printing system. The printing device 300 and the powder spreading device 100 are movably arranged on the frame 200, and are connected with the moving device. The moving device is configured to simultaneously drive the powder spreading device 100 and the printing device 300 to move along different paths, so as to perform powder spreading and printing. In such situation, during operation, a 3D entity is constructed layer by layer through uniformly spreading a layer of powder materials while simultaneously jetting a layer of binder. The 3D printing system of the present disclosure enables at least one powder spreading device 100 and at least one set of printing devices 300 to work simultaneously, which effectively eliminates waiting time during the operation process, achieves continuous powder spreading and printing, thereby significantly improving printing efficiency, reducing printing costs, and ensuring the promotion of industrial application of powder-based 3D printing in various fields.

On the one hand, the powder spreading and printing operations can be performed simultaneously, eliminating waiting time and significantly improving printing efficiency. On the other hand, a plurality of powder spreading devices 100 and a plurality of printing devices 300 simultaneously conduct printing operations on different building platforms within working area, and printing model and layout on each building platform can be customized according to requirements.

In an embodiment, the powder spreading device 100 includes a powder container body 110, a powder barrier assembly 120 and a powder feed roller assembly 130. The powder barrier assembly 120 is provided on a side of the powder container body 110. The powder container body 110 and the powder barrier assembly 120 together form the powder feed container. The bottom of the powder feed container is provided with the powder discharge outlet. The powder feed roller assembly 130 is rotatably provided on the powder discharge outlet, and is configured to extend along the length direction of the powder discharge outlet. A bottom of the powder barrier assembly 120 is in contact with the powder feed roller assembly 130. A plurality of annular powder grooves 131 are arranged spaced apart along the length direction of the powder feed roller assembly 130. In response to a case that the powder feed roller assembly 130 rotates along the preset direction, the powder materials in the powder feed container are sprayed onto the powder spreading surface through the plurality of annular powder grooves 131.

During operation, referring to Fig. 2, the preset direction can be counterclockwise. When the powder materials need to be fed, the powder feed roller assembly 130 rotates counterclockwise to drive the powder materials in the powder feed container to move. When the powder feed roller assembly 130 drives the powder materials to reach the powder barrier assembly 120, part of the powder materials is blocked by the powder barrier assembly 120, and the other part of within the plurality of annular powder grooves 131 passes through the powder barrier assembly 120 then gradually move towards the powder spreading surface through rotation of the powder feed roller assembly 130, and finally is spread onto the powder spreading surface due to gravity. At this time, the powder barrier assembly 120 contacts with the powder feed roller assembly 130, so that the powder materials in the powder feed container can only be conveyed onto the powder spreading surface through the plurality of annular powder grooves 131 via the rotation of the powder feed roller assembly 130, that is, the conveying amount of powder materials depends on the size of each annular powder grooves 131, thereby realizing quantitative powder feeding effect through the plurality of annular powder grooves 131, ensuring the flatness of the powder spreading surface, and improving product quality.

In an embodiment, the 3D printing device further includes a detection device. The moving device is in communication with the detection device. The detection device is configured to detect a state of the printing device 300 and a state of the powder spreading device 100. In response to a case that the powder spreading device 100 completes powder spreading on a first pass along a first direction, the moving device drives the printing device 300 to perform inkjet printing on the first pass. In response to a case that the powder spreading device 100 completes powder spreading on a second pass along a second direction, the moving device is configured to drive the printing device 300 to perform inkjet printing on the second pass, and so on, so as to complete the powder spreading and inkjet printing, where the first direction is opposite to the second direction. Optionally, the number of the first pass can be one or more, the number of the second pass can be one or more, and the whole powder spreading surface is formed by the first pass and the second pass.

Referring to an embodiment in Fig. 8, a first arrow 190 represents a movement direction of the powder spreading device 100, and a second arrow 310 represents a movement direction of the printing device 300. When the powder spreading device 100 completes a first powder spreading travel equal to a width of the printing device 300, the printing device 300 starts to perform a first spraying operation of a binder on a powder layer along a direction perpendicular to the powder spreading direction. During the binder spraying process, the powder spreading device 100 continuously operates. When the powder spreading device 100 completes a second powder spreading travel equal to the width of the printing device 300, the printing device 300 moves by a distance equal to the width of the printing device 300 along the spreading direction, and then performs a second spraying operation of the binder along a direction opposite to the movement direction in the first spraying operation. Such operation is repeated until the powder spreading device 100 and the printing device 300 complete the powder spreading operation and the printing operation for the first layer. The continuous and coordinated operation of the powder spreading device 100 and the printing device 300 greatly improves the flexibility and efficiency of the printing process.

Based on the 3D printing system described above, a 3D printing method is provided and described as follows.

(S100) When the powder spreading device 100 completes the first powder spreading path with the width of the printing device 300, the printing device 300 starts to spray the binder on the first binder path along the direction perpendicular to the powder spreading direction.

(S200) During the process of the printing device 300 spraying the binder, the powder spreading device 100 continuously operates. When the powder spreading device 100 completes the second powder spreading path with the width of the printing device 300, the printing device 300 starts to spray the binder on the second binder path along the direction opposite to the first binder path.

(S300) Steps (S100)-(S200) are repeated until the powder spreading device 100 and the printing device 300 complete the powder feeding operation and the printing operation of the first layer.

The 3D printing method can effectively eliminate the waiting time during operation and realizes continuous powder spreading and printing, thereby significantly improving printing efficiency, reducing printing costs, and providing a guarantee for promoting the industrial application of powder 3D printing in various fields.

In the 3D printing device of the present disclosure, the powder barrier assembly 120 includes the mounting part 121 and the contact part 122. The mounting part 121 is removably arranged on the side of the powder container body 110. The contact part 122 is removably arranged on the bottom of the mounting part 121, and the contact part 122 is in contact with the powder feed roller assembly 130.

In an embodiment, the powder spreading device 100 includes the plurality of connecting baffles 140 varying in size. The plurality of connecting baffles 140 are configured to connect the powder barrier assembly 120 with the powder container body 110. The powder barrier assembly 120 contacts with different positions on the powder feed roller assembly 130 through the plurality of connecting baffles 140 varying in size.

In an embodiment, the powder barrier assembly 120 is rotatably arranged on the side of the powder container body 110, and contacts with different positions on the powder feed roller assembly 130 through rotation.

In an embodiment, a width of each of the plurality of annular powder grooves 131 is configured to increase along the radial direction of the powder feed roller assembly 130.

In an embodiment, the powder feed roller assembly 130 includes the plurality of rollers. The plurality of rollers are connected in sequence, and the plurality of rollers are each independently provided with a drive part. The drive part is configured to drive the plurality of rollers to rotate.

In an embodiment, the powder feed roller assembly 130 further includes the central shaft. The plurality of rollers are sleevedly provided on the central shaft in sequence. Drive parts of the plurality of rollers are provided spaced apart on the central shaft. The plurality of rollers are drivably connected with the drive parts in one-to-one correspondence.

In an embodiment, the powder spreading device 100 further includes the powder spreading component 150 and the two scrapers 160. The powder spreading component 150 is provided on the bottom of the powder feed roller assembly 130. The powder spreading component 150 is provided with the powder spreading channel 151. The powder spreading channel 151 is configured to face towards the powder feed roller assembly 130. The two scrapers 160 are provided on two sides of the bottom the powder spreading channel 151, respectively. The two scrapers 160 are configured to extend along the length direction of the powder spreading channel 151.

In an embodiment, the powder spreading device 100 further includes the powder distribution mechanism 170. The powder distribution mechanism170 is movably arranged in the powder feed container, and is configured to extend along the length direction of the powder feed roller assembly 130.

In an embodiment, the powder distribution mechanism170 includes the powder distribution main body and the drive component. The drive component is drivably connected with the powder distribution main body. The powder distribution main body is provided with the toothed part 171. The drive component is configured to drive the toothed part 171 to reciprocate along the length direction of the powder feed roller assembly 130.

In an embodiment, the powder spreading device 100 further includes the powder scraping mechanism 180. The powder scraping mechanism 180 is provided on the bottom of the powder feed roller assembly 130. The powder scraping mechanism 180 is provided with the plurality of protrusions 181 spaced apart along its length direction, and the plurality of protrusions 181 are configured to correspondingly fit the plurality of annular powder grooves 131.

Based on the 3D printing system of the present disclosure, a 3D printing production line is provided. The 3D printing production line includes the 3D printing system described above.

The 3D printing production line includes a centralized sand mixing device 500 and a centralized liquid supply device 600. The number of the 3D printing device is plurality. A plurality of 3D printing systems 400 are arranged spaced. Each of the plurality of 3D printing systems 400 communicates with the centralized sand mixing device 500 and the centralized liquid supply device 600. The centralized sand mixing device 500 is configured to supply sand to each of the plurality of 3D printing systems 400. The centralized liquid supply device 600 is configured to perform liquid supply to each of the plurality of 3D printing systems 400. In such situation, the plurality of 3D printing systems 400 are centrally planned and arranged to form a larger production system, which reduces free time of individual devices during production and improving the utilization efficiency of the equipment, thereby achieving efficient 3D printing.

The 3D printing production line further includes a sand cleaning station 710, a drying station 720, a workpiece storage station 730 and a conveying mechanism 740. The sand cleaning station 710, the drying station 720 and the workpiece storage station 730 are arranged in sequence. The sand cleaning station 710 is configured for sand removal treatment of printed workpieces. In an embodiment, the sand cleaning station 710 includes a gantry, a sand cleaning device, and a sand blowing device. The sand cleaning device and the sand blowing device are arranged on the gantry, successively, so that the sand removal treatment of printed workpieces can be performed through grabbing by the gantry. Or the sand removal treatment can be performed through conveying of the plurality of rollers. Such arrangement is not limited by the embodiments of the present disclosure. The drying station 720 is configured to dry the printed workpieces. Of course, it can also include a flow coating station to perform flow coating on some workpieces. The workpiece storage station 730 is configured to temporarily store the printed workpieces. In an embodiment, the printed workpieces can be conveyed through a transfer trolley to the e workpiece storage station 730, or can be temporarily stored or picked up through automated inventory in/out via barcode scanning, so as to better organize the printed workpieces.

The conveying mechanism 740 is configured to transport the printed workpieces from the plurality of 3D printing systems 400 to the various stations, so as to ensure printing production efficiency. In an embodiment, the conveying mechanism 740 is an independent transfer trolley, a transfer trolley movably provided on a transport roller conveyor, or any other mechanisms capable of conveying function, which is not limited by the embodiments of the present disclosure.

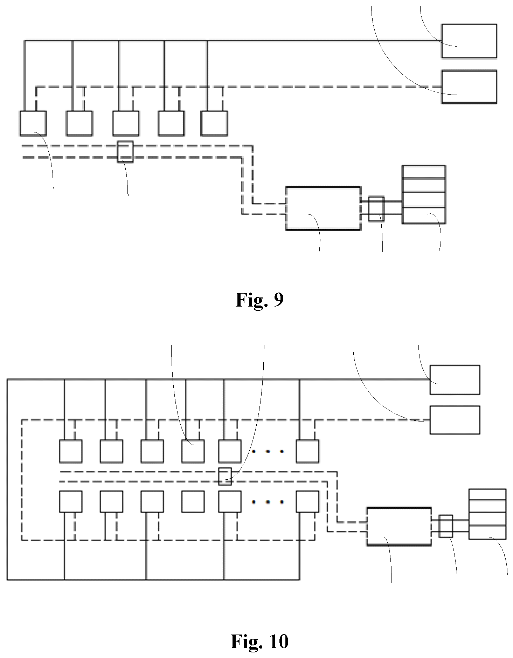

In an embodiment, the plurality of 3D printing systems 400 are arranged in one or more rows as shown in Figs. 9-10. In an embodiment, the plurality of 3D printing systems 400 are arranged in one or more rows according to spatial layout, so as to realize efficient 3D printing through rational utilization of space.

Some embodiments of the present disclosure have been described in detail above, which are not intended to limit the disclosure. It should be noted that various improvements and modifications made by those of ordinary skill in the art without departing the spirit of the present disclosure shall fall within the scope of this application defined by the appended claims.

## Claims

1. A powder spreading device, comprising:
a powder container body (110);
a powder barrier assembly (120); and
a powder feed roller assembly (130);
**characterized in that** the powder barrier assembly (120) is provided on a side of the powder container body (110); the powder container body (110) and the powder barrier assembly (120) together form a powder feed container; a bottom of the powder container body (110) is provided with a powder discharge outlet; the powder feed roller assembly (130) is rotatably provided on the powder discharge outlet, and is configured to extend along a length direction of the powder discharge outlet; a bottom of the powder barrier assembly (120) is in contact with the powder feed roller assembly (130); and a plurality of annular powder grooves (131) are arranged spaced apart along a length direction of the powder feed roller assembly (130); and
in response to a case that the powder feed roller assembly (130) rotates along a preset direction, powder materials in the powder feed container are spread onto a powder spreading surface through the plurality of annular powder grooves (131).

2. The powder spreading device according to claim 1, **characterized in that** the powder barrier assembly (120) comprises a mounting part (121) and a contact part (122); the mounting part (121) is removably provided on the side of the powder container body (110); the contact part (122) is removably arranged on a bottom of the mounting part (121); and the contact part (122) is in contact with the powder feed roller assembly (130).

3. The powder spreading device according to claim 1, further comprising:
a plurality of connecting baffles (140) varying in size;
wherein the plurality of connecting baffles (140) are configured to connect the powder barrier assembly (120) with the powder container body (110); and
the powder barrier assembly (120) is in contact with different positions on the powder feed roller assembly (130) through the plurality of connecting baffles (140).

4. The powder spreading device according to claim 1, **characterized in that** the powder barrier assembly (120) is rotatably provided on the side of the powder container body (110), and is configured to rotate to be in contact with different positions on the powder feed roller assembly (130).

5. The powder spreading device according to claim 1, **characterized in that** a width of each of the plurality of annular powder grooves (131) is configured to increase along a radial direction of the powder feed roller assembly (130).

6. The powder spreading device according to claim 1, **characterized in that** the powder feed roller assembly (130) comprises a plurality of rollers connected in sequence, and the plurality of rollers are each independently provided with a drive part; and the drive part is configured to drive the plurality of rollers to rotate.

7. The powder spreading device according to claim 6, **characterized in that** the powder feed roller assembly (130) further comprises a central shaft; the plurality of rollers are sleevedly provided on the central shaft in sequence; drive parts of the plurality of rollers are provided spaced apart on the central shaft; and the plurality of rollers are drivably connected with the drive parts in one-to-one correspondence.

8. The powder spreading device according to claim 1, further comprising:
a powder spreading component (150); and
two scrapers (160);
wherein the powder spreading component (150) is provided on a bottom of the powder feed roller assembly (130); the powder spreading component (150) is provided with a powder spreading channel; the powder spreading channel is configured to face towards the powder feed roller assembly (130); the two scrapers (160) are provided on two sides of a bottom the powder spreading channel, respectively; and the two scrapers (160) are configured to extend along a length direction of the powder spreading channel.

9. The powder spreading device according to claim 1, further comprising:
a powder distribution mechanism (170);
wherein the powder distribution mechanism (170) is movably arranged in the powder feed container, and is configured to extend along the length direction of the powder feed roller assembly (130).

10. The powder spreading device according to claim 9, **characterized in that** the powder distribution mechanism (170) comprises a powder distribution main body and a drive component; the drive component is drivably connected with the powder distribution main body; the powder distribution main body is provided with a toothed part (171); and the drive component is configured to drive the toothed part (171) to reciprocate along the length direction of the powder feed roller assembly (130), or to rotate in the powder feed container.

11. The powder spreading device according to claim 1, further comprising:
a powder scraping mechanism (180);
wherein the powder scraping mechanism (180) is provided on a bottom of the powder feed roller assembly (130); the powder scraping mechanism (180) is provided with a plurality of protrusions (181) spaced apart along its length direction; and the plurality of protrusions (181) are configured to correspondingly fit the plurality of annular powder grooves (131).

12. The powder spreading device according to claim 1, **characterized in that** the powder feed roller assembly (130) comprises a plurality of rotating components; and the plurality of rotating components are connected in sequence, and each of the plurality of annular powder grooves (131) is formed between two adjacent rotating components among the plurality of rotating components.

13. The powder spreading device according to claim 1, **characterized in that** the powder feed roller assembly (130) is formed through casting, additive manufacturing or machining.

14. The powder spreading device according to claim 1, **characterized in that** each of the plurality of annular powder grooves (131) is provided with a coating.

15. A three-dimensional (3D) printing system, comprising:
the powder spreading device according to any one of claims 1-14.

16. A three-dimensional (3D) printing system, comprising:
a frame (200);
a powder spreading device (100);
a printing device (300); and
a moving device;
**characterized in that** the printing device (300) and the powder spreading device (100) are movably arranged on the frame (200), and are drivably connected with the moving device;
the moving device is configured to simultaneously drive the powder spreading device (100) and the printing device (300) to move along different paths, so as to simultaneously perform powder spreading and printing;
the powder spreading device (100) comprises a powder container body (110), a powder barrier assembly (120) and a powder feed roller assembly (130); and
the powder barrier assembly (120) is provided on a side of the powder container body (110); the powder container body (110) and the powder barrier assembly (120) together form a powder feed container; a bottom of the powder container body (110) is provided with a powder discharge outlet; the powder feed roller assembly (130) is rotatably provided at the powder discharge outlet, and is configured to extend along a length direction of the powder discharge outlet; a bottom of the powder barrier assembly (120) is in contact with the powder feed roller assembly (130); and a plurality of annular powder grooves (131) are arranged spaced apart along a length direction of the powder feed roller assembly (130); and
in response to a case that the powder feed roller assembly (130) rotates along a preset direction, powder materials in the powder feed container are spread onto a powder spreading surface through the plurality of annular powder grooves (131).

17. The 3D printing system according to claim 16, further comprising:
a detection device;
wherein the moving device is in communication with the detection device; the detection device is configured to detect a state of the printing device (300) and a state of the powder spreading device (100);
in response to a case that the powder spreading device (100) completes powder spreading on a first pass along a first direction, the moving device is configured to drive the printing device (300) to perform inkjet printing on the first pass;
in response to a case that the powder spreading device (100) completes powder spreading on a second pass along a second direction, the moving device is configured to drive the printing device (300) to perform inkjet printing on the second pass, and so on, so as to complete powder spreading and inkjet printing, wherein the first direction is opposite to the second direction.

18. The 3D printing system according to claim 16, **characterized in that** the powder barrier assembly (120) comprises a mounting part (121) and a contact part (122); the mounting part (121) is removably provided on the side of the powder container body (110); the contact part (122) is removably arranged on a bottom of the mounting part (121); and the contact part (122) is in contact with the powder feed roller assembly (130).

19. The 3D printing system according to claim 16, **characterized in that** the powder spreading device (100) further comprises a plurality of connecting baffles (140) varying in size; the plurality of connecting baffles (140) are configured to connect the powder barrier assembly (120) with the powder container body (110); the powder barrier assembly (120) is in contact with different positions on the powder feed roller assembly (130) through the plurality of connecting baffles (140) varying in size.

20. The 3D printing system according to claim 16, **characterized in that** the powder barrier assembly (120) is rotatably arranged on the side of the powder container body (110), and is configured to rotate to be in contact with different positions on the powder feed roller assembly (130).

21. The 3D printing system according to claim 16, **characterized in that** a width of each of the plurality of annular powder grooves (131) is configured to increase along a radial direction of the powder feed roller assembly (130).

22. The 3D printing system according to claim 16, **characterized in that** the powder feed roller assembly (130) comprises a plurality of rollers connected in sequence, and the plurality of rollers are each independently provided with a drive part; and the drive part is configured to drive the plurality of rollers to rotate.

23. The 3D printing system according to claim 22, **characterized in that** the powder feed roller assembly (130) further comprises a central shaft; the plurality of rollers are sleevedly provided on the central shaft; drive parts of the plurality of rollers are provided spaced apart on the central shaft; and the plurality of rollers is drivably connected with the drive parts in one-to-one correspondence.

24. The 3D printing system according to claim 16, **characterized in that** the powder spreading device (100) further comprises a powder spreading component (150) and two scrapers (160); the powder spreading component (150) is provided on a bottom of the powder feed roller assembly (130); the powder spreading component (150) is provided with a powder spreading channel; the powder spreading channel is configured to face towards the powder feed roller assembly (130); the two scrapers (160) are provided on two sides of a bottom the powder spreading channel, respectively; and the two scrapers (160) are configured to extend along a length direction of the powder spreading channel.

25. The 3D printing system according to claim 16, **characterized in that** the powder spreading device (100) further comprises a powder distribution mechanism (170); the powder distribution mechanism (170) is movably arranged in the powder feed container, and extends along the length direction of the powder feed roller assembly (130).

26. The 3D printing system according to claim 25, **characterized in that** the powder distribution mechanism (170) comprises a powder distribution main body and a drive component; the drive component is drivably connected with the powder distribution main body; the powder distribution main body is provided with a toothed part (171); and the drive component is configured to drive the toothed part (171) to reciprocate along the length direction of the powder feed roller assembly (130), or to rotate in the powder feed container.

27. The 3D printing system according to claim 16, **characterized in that** the powder spreading device (100) further comprises a powder scraping mechanism (180); the powder scraping mechanism (180) is provided on a bottom of the powder feed roller assembly (130); the powder scraping mechanism (180) is provided with a plurality of protrusions (181) spaced apart along its length direction, and the plurality of protrusions (181) are configured to correspondingly fit the plurality of annular powder grooves (131).

28. A three-dimensional (3D) printing production line, comprising:
the 3D printing system (400) according to any one of claims 15-27.

29. The 3D printing production line according to claim 28, further comprising:
a centralized sand mixing device (500); and
a centralized liquid supply device (600);
wherein a plurality of 3D printing systems (400) are arranged spaced apart; each of the plurality of 3D printing systems (400) communicates with the centralized sand mixing device (500) and the centralized liquid supply device (600); the centralized sand mixing device (500) is configured to supply sand to each of the plurality of 3D printing systems (400); and the centralized liquid supply device (600) is configured to perform liquid supply for each of the plurality of 3D printing systems (400).

30. The 3D printing production line according to claim 28, further comprising:
a sand cleaning station (710);
a drying station (720);
a workpiece storage station (730); and
a conveying mechanism (740);
wherein the sand cleaning station (710), the drying station (720) and the workpiece storage station (730) are arranged in sequence; and the conveying mechanism (740) is configured to transport printed workpieces from each of the plurality of 3D printing systems (400) sequentially to the sand cleaning station (710), the drying station (720) and the workpiece storage station (730).

31. The 3D printing production line according to any one of claims 28-30, **characterized in that** the plurality of 3D printing systems (400) are arranged in one or more rows.
